# EUROPEAN PATENT SPECIFICATION

(11) **EP 3 405 668 B1**
(45) Date of publication and mention of the grant of the patent: **17.03.2021**
(21) Application number: 16702754.9
(22) Date of filing: 21.01.2016
(51) Int. Cl.: F02M 57/00, G01D 11/30

(54) **MOUNTING ARRANGEMENT AND METHOD FOR CONNECTING A SENSOR**
MONTAGEANORDNUNG UND VERFAHREN ZUM ANSCHLIESSEN EINES SENSORS
AGENCEMENT DE MONTAGE ET PROCÉDÉ POUR LE RACCORDEMENT D'UN CAPTEUR

(43) Date of publication of application: 28.11.2018
(73) Proprietor: Wärtsilä Finland Oy, 65100 Vaasa (FI)
(72) Inventor: VUOHIJOKI, Antti, 65100 Vaasa (FI); EKLUND, Kjell, 65100 Vaasa (FI); LAAKSO, Ossi, 65100 Vaasa (FI)
(74) Representative: Berggren Oy, Helsinki & Oulu
(86) International application number: PCT/FI2016/050028
(87) International publication number: WO 2017/125640

(56) References cited:
- EP-A1- 2 730 905
- EP-A2- 2 105 602
- WO-A1-2006/061455
- DE-A1-102010 043 366
- US-A- 1 966 911
- US-A1- 2008 271 548
- US-B1- 6 575 048

## Description

### Technical field of the invention

The present invention relates to a mounting arrangement for connecting a sensor to a component of a fuel injection system in accordance with claim 1. The invention also concerns a method for connecting a sensor to a component of a fuel injection system as defined in the other independent claim.

### Background of the invention

In US patent publication 6575048 is disclosed an assembly for positioning a sensor in a body having an environment contained therein, and more particularly to an assembly for use with a sensor of a variety including an elongate terminal portion receivable through a wall of the body which assembly allows the sensor to be positioned at a select angular orientation.

Different sensors are needed in many different applications. Usually the sensors are provided with cables for transmitting signals to and from the sensors. If the sensor needs to be firmly attached to the component where it is used for monitoring, usually a threaded connection is used. A problem with a threaded connection is that the cable needs to be rotated with the sensor, which makes the mounting of the sensor difficult. The problem can be addressed by providing the sensor with a removable cable. However, a removable cable may lead to problems in connectors between the cable and the sensor.

### Summary of the invention

An object of the present invention is to provide an improved mounting arrangement for connecting a sensor to a component of a fuel injection system. The characterizing features of the mounting arrangement according to the invention are given in claim 1. Another object of the invention is to provide an improved method for connecting a sensor to a component of a fuel injection system. The characterizing features of the method are given in the other independent claim. The mounting arrangement according to the invention comprises a sensor having a first end and a second end, the first end of the sensor being configured to face towards the component of the fuel injection system, an inner mounting sleeve that is arranged around the sensor, and an outer mounting sleeve that is arranged around the inner mounting sleeve. The sensor comprises a threaded portion with an external thread, the inner mounting sleeve comprises a threaded portion with an internal thread that can be engaged with the external thread of the sensor and a shoulder that is arranged on an outer perimeter of the inner mounting sleeve, and the outer mounting sleeve comprises a shoulder that is arranged on an inner perimeter of the outer mounting sleeve and configured to be engaged with the shoulder of the inner mounting sleeve, and a threaded portion with an external thread for engaging the outer mounting sleeve with an internal thread of the component of the fuel injection system. The method according to the invention comprises the steps of arranging an outer mounting sleeve around an inner mounting sleeve, arranging the inner mounting sleeve around the sensor, engaging an internal thread of the inner mounting sleeve with an external thread of the sensor, engaging an external thread of the outer mounting sleeve with an internal thread of the component of the fuel injection system, tightening the outer mounting sleeve against the component of the fuel injection system, holding the sensor in a fixed rotational position and simultaneously rotating the inner mounting sleeve in relation to the sensor and the outer mounting sleeve for pressing a shoulder of the inner mounting sleeve against a shoulder of the outer mounting sleeve and tightening the sensor against the component of the fuel injection system.

With the mounting arrangement and method according to the invention, the sensor can be attached to a component of a fuel injection system without rotating the sensor and without a need of disconnecting a cable from the sensor. The sensor is thus easy to connect and the connection between the sensor and the cable can be made robust and reliable.

According to an embodiment of the invention, the shoulders of the inner mounting sleeve and the outer mounting sleeve taper towards the second end of the sensor. The sensor is a pressure sensor.

According to the invention, the first end of the sensor is provided with a sealing surface.

According to the invention, an end surface of the outer mounting sleeve is configured to function as a sealing surface against the component of the fuel injection system.

According to an embodiment of the invention, the outer diameter of the threaded portion of the outer mounting sleeve is at least 1.8 times the outer diameter of the threaded portion of the sensor. The ratio between the diameters of the sensor and the outer mounting sleeve determines the combined wall thickness of the inner mounting sleeve and the outer mounting sleeve. Larger ratio thus allows greater wall thicknesses. A large diameter of the outer mounting sleeve distributes the force affecting the thread of the outer mounting sleeve to a larger area.

According to an embodiment of the invention, the threaded portion of the outer mounting sleeve and the threaded portion of the sensor have different thread directions. Different thread directions ensure that the outer mounting sleeve does not loosen when the inner mounting sleeve is tightened.

A sensor assembly according to the invention comprises a mounting arrangement according to any of the preceding claims connected to a component of a fuel injection system.

According to an embodiment of the invention, the shoulders of the inner mounting sleeve and the outer mounting sleeve are arranged below the level of the outer surface of the component of the fuel injection system. Side forces caused by tightening of the sensor assembly are thus carried by the component.

According to an embodiment of the invention, the component of the fuel injection system is a connection piece connecting a fuel rail to another component of the fuel injection system.

### Brief description of the drawings

Embodiments of the invention are described below in more detail with reference to the accompanying drawings, in which
Fig. 1 shows part of a connection piece of a fuel injection system with an exploded view of a mounting arrangement according to an embodiment of the invention, and
Fig. 2 shows a cross-sectional view of a sensor assembly according to an embodiment of the invention.

### Description of embodiments of the invention

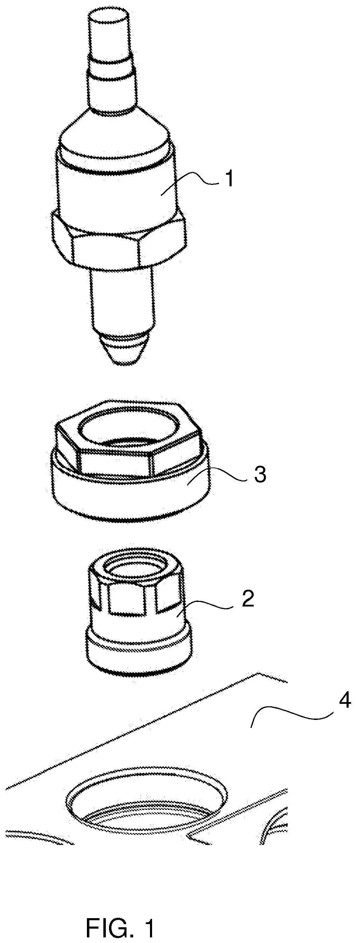

Figure 1 shows part of a connection piece 4 of a fuel injection system. The fuel injection system can be, for instance, a fuel injection system of a large internal combustion engine, such as a main or an auxiliary engine of a ship or an engine that is used at a power plant for producing electricity. The connection piece 4 is used for establishing fluid communication between two or more components of the fuel injection system. For instance, the connection piece 4 can be used in a common rail fuel injection system to connect two fuel rails to each other. For instance, in a fuel injection system of a V-engine, the connection piece 4 can establish fluid communication between the fuel rails of each bank of the engine. A sensor 1 is connected to the connection piece 4. The pressure sensor 1 is arranged to monitor pressure on the high-pressure side of the fuel injection system. Figure 1 shows an exploded view of a mounting arrangement that is used for connecting the pressure sensor 1 to the connection piece 4. The mounting arrangement comprises an inner mounting sleeve 2 and an outer mounting sleeve 3.

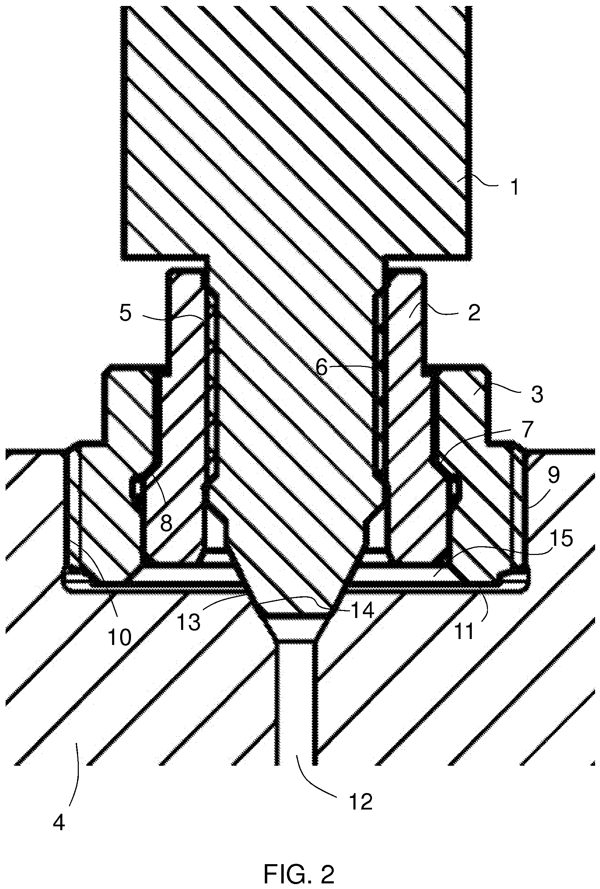

Figure 2 shows a cross-sectional view of a sensor assembly, where a pressure sensor 1 is attached to a connection piece 4 of a fuel injection system using a mounting arrangement according to an embodiment of the invention. The pressure sensor 1 can be a standard pressure sensor commonly used in fuel injection systems. The pressure sensor 1 has a first end and a second end. The first end of the pressure sensor 1 is configured to face towards the connection piece 4 and functions as a probe. The second end of the pressure sensor 1 is a free end facing outwards from the connection piece 4. A cable can be connected to the second end of the pressure sensor 1. The pressure sensor 1 comprises a threaded portion 5. The threaded portion 5 is provided with an external thread for allowing the pressure sensor 1 to be attached to a component where pressure needs to be monitored. The first end of the pressure sensor 1 comprises a sealing surface 13. The sealing surface 13 can be a conical or a spherical surface and it is configured to be arranged against a sealing surface 14 of the connection piece 4. The connection piece 4 comprises a connecting duct 12 for establishing fluid communication between the pressure sensor 1 and the high-pressure side of the fuel injection system.

In the mounting arrangement according to the invention, the threaded portion 5 of the pressure sensor 1 is utilized for attaching the pressure sensor 1 to the connection piece 4. However, the pressure sensor 1 is not attached directly to the connection piece 4. The mounting arrangement according to the invention comprises an inner mounting sleeve 2 and an outer mounting sleeve 3. The inner mounting sleeve 2 is arranged around the pressure sensor 1 and the outer mounting sleeve 3 is arranged around the inner mounting sleeve 2. The inner mounting sleeve 2 comprises a threaded portion 6. The threaded portion 6 is provided with an internal thread, which can be engaged with the thread of the pressure sensor 1. The outer mounting sleeve 3 comprises a threaded portion 9. The threaded portion 9 of the outer mounting sleeve 3 is provided with an external thread. The connection piece 4 comprises a cylindrical recess 15, which is concentric with the sealing surface 14 of the connection piece 4. The recess 15 is provided with an internal thread 10. The thread of the outer mounting sleeve 3 can be engaged with the thread of the connection piece 4. The outer perimeter of the inner mounting sleeve 2 comprises a shoulder 7. The inner perimeter of the outer mounting sleeve 3 comprises a shoulder 8. The shoulder 7 of the inner mounting sleeve 2 is configured to be engaged with the shoulder 8 of the outer mounting sleeve 3. The shoulders 7, 8 of the inner mounting sleeve 2 and the outer mounting sleeve 3 taper towards the second end of the pressure sensor 1, i.e. outwards from the connection piece 4. The shoulders 7, 8 form thus conical contact surfaces between the inner mounting sleeve 2 and the outer mounting sleeve 3. The conical contact surfaces improve the fatigue resistance of the sensor assembly. The shoulders 7, 8 are configured to be in a sensor assembly below the outer surface of the connection piece 4. The shoulders 7, 8 are thus configured to be in the longitudinal direction of the pressure sensor 1 within the area defined by the recess 15. Side forces transmitted via the conical contact surfaces are thus supported by the walls of the recess 15.

For attaching the pressure sensor 1 to the connection piece 4, the outer mounting sleeve 3 is arranged around the inner mounting sleeve 2. After arranging the outer mounting sleeve 3 around the inner mounting sleeve 2, the outer mounting sleeve 3 can be attached to the connection piece 4 by engaging the threads of the outer mounting sleeve 3 with the threads of the connection piece 4, or the inner mounting sleeve 2 can be arranged around the first end of the pressure sensor 1. The outer mounting sleeve 3 is tightened against the connection piece 4. The pressure sensor 1 is tightened against the connection piece 4 be means of the inner mounting sleeve 2. The pressure sensor 1 is hold in a fixed rotational position and the inner mounting sleeve 2 is rotated in relation to the pressure sensor 1 and the outer mounting sleeve 3. As the inner mounting sleeve 2 is rotated, the pressure sensor 1 moves in the longitudinal direction of the pressure sensor 1 towards the connection piece 4. As the sealing surface 13 of the pressure sensor 1 is pressed against the sealing surface 14 of the connection piece 4, the shoulders 7, 8 of the inner mounting sleeve 2 and the outer mounting sleeve 3 are tightly pressed against each other.

With the mounting arrangement according to the invention, the pressure sensor 1 can be attached to a connection piece 4 of a fuel injection system without rotating the pressure sensor 1. There is thus no need to rotate a cable of the pressure sensor 1 together with the pressure sensor 1 or to disconnect the cable from the pressure sensor 1 before attaching the pressure sensor 1 to the connection piece 4. The assembling of the pressure sensor 1 is thus facilitated and the connection between the pressure sensor 1 and the cable is easier to make robust and reliable. In addition, the sealing surface 13 of the pressure sensor 1 does not need to be rotated against the sealing surface 14 of the connection piece 4.

An end surface 11 of the outer mounting sleeve 3 functions as a sealing surface. The sealing surface 11 prevents fuel that has leaked from the connecting duct 12 from leaking outside the mounting arrangement.

According to an embodiment of the invention, the thread direction of the thread of the outer mounting sleeve 3 is different from the thread direction of the pressure sensor 1. If the pressure sensor 1 has a right-hand thread, the outer mounting sleeve 3 can thus be provided with a left-hand thread. This ensures that the outer mounting sleeve 3 does not loosen when the inner mounting sleeve 2 is tightened. However, it is not necessary to provide the pressure sensor 1 and the outer mounting sleeve 3 with different thread directions. Firm attachment of the outer mounting sleeve 3 could also be ensured for example by applying glue to the threads of the outer mounting sleeve 3 or the connection piece 4. It is also possible that no additional measures are needed to ensure reliable attachment of the outer mounting sleeve 3 since the larger diameter of the outer mounting sleeve 3 compared to the diameter of the pressure sensor 1 helps to keep the outer mounting sleeve 3 tightly connected to the connection piece 4.

According to an embodiment of the invention, the outer diameter of the threaded portion 9 of the outer mounting sleeve 3 is at least 1.8 times the outer diameter of the threaded portion 5 of the pressure sensor 1. The large diameter of the outer mounting sleeve 3 allows the recess 15 of the connection piece to be made shallower. The ratio between the diameters of the outer mounting sleeve 3 and the pressure sensor 1 also affect how thick the inner mounting sleeve 2 and the outer mounting sleeve 3 can be made.

It will be appreciated by a person skilled in the art that the invention is not limited to the embodiments described above, but may vary within the scope of the appended claims. For instance, the invention is not limited to pressure sensors, but could also be applied to other types of sensors. The mounting arrangement could also be used for connecting a sensor to some other part of a fuel injection system than a connection piece. The mounting arrangement is also suitable for connecting sensors in other applications than fuel injection systems.

## Claims

1. A mounting arrangement for connecting a pressure sensor (1) to a component (4) of a fuel injection system, the mounting arrangement comprising
- a pressure sensor (1) having a first end and a second end, the first end of the sensor (1) being configured to face towards the component (4) of the fuel injection system,
**characterized in that** the arrangement comprises
- an inner mounting sleeve (2) that is arranged around the pressure sensor (1), and
- an outer mounting sleeve (3) that is arranged around the inner mounting sleeve (2),
wherein
- the first end of the pressure sensor (1) is provided with a sealing surface (13), which is configured to be pressed against a sealing surface (14) of said component (4) of the fuel injection system, and an end surface (11) of the outer mounting sleeve (3) is configured to function as the sealing surface (13) against the component (4) of the fuel injection system,
- the sensor (1) comprises a threaded portion (5) with an external thread,
- the inner mounting sleeve (2) comprises a threaded portion (6) with an internal thread that is configured to be engaged with the external thread of the sensor (1) and a shoulder (7) that is arranged on an outer perimeter of the inner mounting sleeve (2), and
- the outer mounting sleeve (3) comprises a shoulder (8) that is arranged on an inner perimeter of the outer mounting sleeve (3) and configured to be engaged with the shoulder (7) of the inner mounting sleeve (2), and a threaded portion (9) with an external thread for engaging the outer mounting sleeve (3) with an internal thread (10) of the component (4) of the fuel injection system.

2. A mounting arrangement according to claim 1, wherein the shoulders (7, 8) of the inner mounting sleeve (2) and the outer mounting sleeve (3) taper towards the second end of the sensor (1).

3. A mounting arrangement according to any of the preceding claims, wherein the outer diameter of the threaded portion (9) of the outer mounting sleeve (3) is at least 1.8 times the outer diameter of the threaded portion (6) of the sensor (1).

4. A mounting arrangement according to any of the preceding claims, wherein the threaded portion (9) of the outer mounting sleeve (3) and the threaded portion (6) of the sensor (1) have different thread directions.

5. A sensor assembly comprising a mounting arrangement according to any of the preceding claims connected to a component (4) of a fuel injection system.

6. A sensor assembly according to claim 5, wherein the shoulders (7, 8) of the inner mounting sleeve (2) and the outer mounting sleeve (3) are arranged below the level of the outer surface of the component (4) of the fuel injection system.

7. A sensor assembly according to claim 5 or 6, wherein the component (4) of the fuel injection system is a connection piece connecting a fuel rail to another component of the fuel injection system.

8. A method for connecting a pressure sensor (1) to a component (4) of a fuel injection system, the method comprising the steps of
- arranging an outer mounting sleeve (3) around an inner mounting sleeve (2),
- arranging the inner mounting sleeve (2) around the pressure sensor (1),
- engaging an internal thread of the inner mounting sleeve (2) with an external thread of the sensor (1),
- engaging an external thread of the outer mounting sleeve (3) with an internal thread of the component (4) of the fuel injection system,
- tightening the outer mounting sleeve (3) against the component (4) of the fuel injection system,
- holding the sensor (1) in a fixed rotational position and simultaneously rotating the inner mounting sleeve (2) in relation to the sensor (1) and the outer mounting sleeve (3) for pressing a shoulder (7) of the inner mounting sleeve (2) against a shoulder (8) of the outer mounting sleeve (3) and tightening the pressure sensor (1) and an end surface (11) of the outer mounting sleeve (3) functioning a sealing surface (13) at a first end of the pressure sensor (1) against a sealing surface (14) of the component (4) of the fuel injection system.

## Patentansprüche

1. Montageanordnung zum Verbinden eines Drucksensors (1) mit einer Komponente (4) eines Kraftstoffeinspritzsystems, wobei die Montageanordnung Folgendes umfasst
- einen Drucksensor (1) mit einem ersten Ende und einem zweiten Ende, wobei das erste Ende des Sensors (1) konfiguriert ist, um der Komponente (4) des Kraftstoffeinspritzsystems zugewandt zu sein;
**dadurch gekennzeichnet, dass** die Anordnung Folgendes umfasst
- eine innere Montagehülse (2), die um den Drucksensor (1) angeordnet ist, und
- eine äußere Montagehülse (3), die um die innere Montagehülse (2) angeordnet ist,
wobei
- das erste Ende des Drucksensors (1) mit einer Dichtfläche (13) versehen ist, die konfiguriert ist, um gegen eine Dichtfläche (14) der Komponente (4) des Kraftstoffeinspritzsystems gedrückt zu werden, und eine Endfläche (11) der äußeren Montagehülse (3) konfiguriert ist, um als Dichtfläche (13) gegen die Komponente (4) des Kraftstoffeinspritzsystems zu fungieren,
- der Sensor (1) einen Gewindeabschnitt (5) mit einem Außengewinde umfasst,
- die innere Montagehülse (2) einen Gewindeabschnitt (6) mit einem Innengewinde, das konfiguriert ist, um mit dem Außengewinde des Sensors (1) in Eingriff zu stehen, und eine Schulter (7), die an einem Außenumfang der inneren Montagehülse (2) angeordnet ist, umfasst, und
- die äußere Montagehülse (3) eine Schulter (8), die an einem Innenumfang der äußeren Montagehülse (3) angeordnet und konfiguriert ist, um mit der Schulter (7) der inneren Montagehülse (2) in Eingriff zu stehen, und einen Gewindeabschnitt (9) mit einem Außengewinde zum Eingreifen der äußeren Montagehülse (3) mit einem Innengewinde (10) der Komponente (4) des Kraftstoffeinspritzsystems umfasst.

2. Montageanordnung nach Anspruch 1, wobei sich die Schultern (7, 8) der inneren Montagehülse (2) und der äußeren Montagehülse (3) zum zweiten Ende des Sensors (1) hin verjüngen.

3. Montageanordnung nach einem der vorhergehenden Ansprüche, wobei der Außendurchmesser des Gewindeabschnitts (9) der äußeren Montagehülse (3) mindestens das 1,8-fache des Außendurchmessers des Gewindeabschnitts (6) des Sensors beträgt (1).

4. Montageanordnung nach einem der vorhergehenden Ansprüche, wobei der Gewindeabschnitt (9) der äußeren Montagehülse (3) und der Gewindeabschnitt (6) des Sensors (1) unterschiedliche Gewinderichtungen aufweisen.

5. Sensoranordnung mit einer Montageanordnung nach einem der vorhergehenden Ansprüche, die mit einer Komponente (4) eines Kraftstoffeinspritzsystems verbunden ist.

6. Sensoranordnung nach Anspruch 5, wobei die Schultern (7, 8) der inneren Montagehülse (2) und der äußeren Montagehülse (3) unterhalb des Niveaus der Außenfläche der Komponente (4) des Kraftstoffeinspritzsystems angeordnet sind.

7. Sensoranordnung nach Anspruch 5 oder 6, wobei die Komponente (4) des Kraftstoffeinspritzsystems ein Verbindungsstück ist, das eine Kraftstoffleitung mit einer anderen Komponente des Kraftstoffeinspritzsystems verbindet.

8. Verfahren zum Verbinden eines Drucksensors (1) mit einer Komponente (4) eines Kraftstoffeinspritzsystems, wobei das Verfahren die folgenden Schritte umfasst
- Anordnen einer äußeren Montagehülse (3) um eine innere Montagehülse (2),
- Anordnen der inneren Montagehülse (2) um den Drucksensor (1),
- in Eingriff Bringen eines Innengewindes der inneren Montagehülse (2) in ein Außengewinde des Sensors (1),
- in Eingriff Bringen eines Außengewindes der äußeren Montagehülse (3) in ein Innengewinde der Komponente (4) des Kraftstoffeinspritzsystems,
- Festziehen der äußeren Montagehülse (3) gegen die Komponente (4) des Kraftstoffeinspritzsystems,
- Halten des Sensors (1) in einer festen Drehposition und Drehen der inneren Montagehülse (2) gleichzeitig in Bezug auf den Sensor (1) und die äußere Montagehülse (3), um eine Schulter (7) der inneren Montagehülse (2) gegen eine Schulter (8) der äußeren Montagehülse (3) zu drücken und Festziehen des Drucksensors (1) und einer Endfläche (11) der äußeren Montagehülse (3), die als Dichtfläche (13) an einem ersten Ende des Drucksensors (1) gegen eine Dichtfläche (14) der Komponente (4) des Kraftstoffeinspritzsystems fungiert.

## Revendications

1. Agencement de montage pour raccorder un capteur de pression (1) à un composant (4) d'un système d'injection de carburant, l'agencement de montage comprenant
- un capteur de pression (1) ayant une première extrémité et une seconde extrémité, la première extrémité du capteur (1) étant configurée pour faire face au composant (4) du système d'injection de carburant,
**caractérisé en ce que** l'agencement comprend
- un manchon de montage intérieur (2) qui est agencé autour du capteur de pression (1), et
- un manchon de montage extérieur (3) qui est agencé autour du manchon de montage intérieur (2),
dans lequel
- la première extrémité du capteur de pression (1) est pourvue d'une surface d'étanchéité (13), qui est configurée pour être appuyée contre une surface d'étanchéité (14) dudit composant (4) du système d'injection de carburant, et une surface d'extrémité (11) du manchon de montage extérieur (3) est configurée pour fonctionner comme la surface d'étanchéité (13) contre le composant (4) du système d'injection de carburant,
- le capteur (1) comprend une partie filetée (5) avec un filetage externe,
- le manchon de montage intérieur (2) comprend une partie filetée (6) avec un filetage interne qui est configuré pour être mis en prise avec le filetage externe du capteur (1) et un épaulement (7) qui est agencé sur un périmètre externe du manchon de montage intérieur (2), et
- le manchon de montage extérieur (3) comprend un épaulement (8) qui est agencé sur un périmètre intérieur du manchon de montage extérieur (3) et configuré pour être mis en prise avec l'épaulement (7) du manchon de montage intérieur (2), et une partie filetée (9) avec un filetage externe pour mettre en prise le manchon de montage extérieur (3) avec un filetage interne (10) du composant (4) du système d'injection de carburant.

2. Agencement de montage selon la revendication 1, dans lequel les épaulements (7, 8) du manchon de montage intérieur (2) et du manchon de montage extérieur (3) se rétrécissent vers la seconde extrémité du capteur (1).

3. Agencement de montage selon l'une quelconque des revendications précédentes, dans lequel le diamètre extérieur de la partie filetée (9) du manchon de montage extérieur (3) est au moins 1,8 fois le diamètre extérieur de la partie filetée (6) du capteur (1).

4. Agencement de montage selon l'une quelconque des revendications précédentes, dans lequel la partie filetée (9) du manchon de montage extérieur (3) et la partie filetée (6) du capteur (1) ont des directions de filetage différentes.

5. Ensemble de capteur comprenant un agencement de montage selon l'une quelconque des revendications précédentes raccordé à un composant (4) d'un système d'injection de carburant.

6. Ensemble de capteur selon la revendication 5, dans lequel les épaulements (7, 8) du manchon de montage intérieur (2) et du manchon de montage extérieur (3) sont agencés en dessous du niveau de la surface extérieure du composant (4) du système d'injection de carburant.

7. Ensemble de capteur selon la revendication 5 ou 6, dans lequel le composant (4) du système d'injection de carburant est une pièce de raccordement raccordant une conduite de carburant à un autre composant du système d'injection de carburant.

8. Procédé de raccordement d'un capteur de pression (1) à un composant (4) d'un système d'injection de carburant, le procédé comprenant les étapes
- d'agencement d'un manchon de montage extérieur (3) autour d'un manchon de montage intérieur (2),
- d'agencement du manchon de montage intérieur (2) autour du capteur de pression (1),
- de mise en prise d'un filetage interne du manchon de montage intérieur (2) avec un filetage externe du capteur (1),
- de mise en prise d'un filetage externe du manchon de montage extérieur (3) avec un filetage interne du composant (4) du système d'injection de carburant,
- de serrage du manchon de montage extérieur (3) contre le composant (4) du système d'injection de carburant,
- de maintien du capteur (1) dans une position de rotation fixe et de rotation simultanée du manchon de montage intérieur (2) par rapport au capteur (1) et au manchon de montage extérieur (3) pour appuyer un épaulement (7) du manchon de montage intérieur (2) contre un épaulement (8) du manchon de montage extérieur (3) et de serrage du capteur de pression (1) et d'une surface d'extrémité (11) du manchon de montage extérieur (3) en faisant fonctionner une surface d'étanchéité (13) au niveau d'une première extrémité du capteur de pression (1) contre une surface d'étanchéité (14) du composant (4) du système d'injection de carburant.
